# EUROPEAN PATENT SPECIFICATION

(11) **EP 4 330 730 B1**
(45) Date of publication and mention of the grant of the patent: **17.09.2025**
(21) Application number: 23809953.5
(22) Date of filing: 17.07.2023
(51) Int. Cl.: G01T 1/202, G01T 7/00

(54) **DETECTOR MODULE**
DETEKTORMODUL
MODULE DE DÉTECTION

(30) Priority: 15.07.2022 CN 202210833765; 15.07.2022 CN 202221839360 U
(43) Date of publication of application: 06.03.2024
(73) Proprietor: Shanghai United Imaging Healthcare Co., Ltd., Shanghai 201807 (CN)
(72) Inventor: NIE, Zhen, Shanghai 201807 (CN)
(74) Representative: Wang, Bo
(86) International application number: PCT/CN2023/107796
(87) International publication number: WO 2024/012596

(56) References cited:
- EP-B1- 2 745 142
- WO-A1-2006/040707
- CN-A- 101 820 729
- CN-A- 103 083 028
- CN-A- 105 769 230
- CN-A- 109 152 206
- CN-U- 209 004 029
- CN-U- 217 639 559
- JP-B2- 5 596 087
- US-A- 5 668 851
- US-A1- 2009 218 500
- US-A1- 2011 226 951
- US-A1- 2013 075 609
- US-A1- 2021 190 977

## Description

### CROSS-REFERENCE TO RELATED APPLICATIONS

This application claims priority to Chinese Patent Application Nos. 202210833765.8 and 202221839360.7, both filed on July 15, 2022.

### TECHNICAL FIELD

The present disclosure generally relates to a detector module, and in particular, to a detector module used in a photon counting detector.

### BACKGROUND

A photon counting detector can directly convert rays passing through an object into a detection signal via a detector crystal. The detection signal is then processed (e.g., amplified, integrated, or differentiated and counted based on an energy threshold) by a chip coupled to the detector crystal to achieve spectral interpretation of the rays.

### SUMMARY

According to the invention, a detector module according to claim 1 is provided. The detector module may comprise one or more detector elements. Each of the one or more detector elements may include a detector crystal, a basal board, a supporting component, and a flexible board. The detector crystal may be mounted on a side of the basal board and configured to receive rays from a subject and generate a detection signal based on the rays. The supporting component may be configured to support the basal board. The supporting component may include a concave structure for accommodating at least a portion of the flexible board.

In some embodiments, the flexible board may be located on a second side of the basal board opposite to the side of the basal board.

In some embodiments, each of the one or more detector elements may include a signal transmission channel. The signal transmission channel may include a first portion within the basal board and a second portion within the flexible board. The first portion of the signal transmission channel may be configured to transmit the detection signal from the detector crystal to the second portion. The second portion of the signal transmission channel may be configured to transmit the detection signal to a signal processor.

In some embodiments, the first portion may include a tungsten wire, and the second portion may include a copper wire.

In some embodiments, the signal transmission channel further may include a third portion electrically connected to the first portion and the second portion of the signal transmission channel. The detection signal may be transmitted from the first portion of the signal transmission channel to the second portion of the signal transmission channel via the third portion. The third portion may be located outside the basal board and the flexible board.

In the invention, the supporting component includes a first surface facing the basal board and a second surface adjacent to the first surface. The concave structure includes a first concave and a second concave. The first concave is formed with respect to the first surface of the supporting component and configured to accommodate a first portion of the flexible board. The second concave is formed with respect to the second surface of the supporting component and configured to accommodate a second portion of the flexible board.

In some embodiments, a depth of the first concave with respect to the first surface of the supporting component may relate to at least one of a thickness of a connection member for connecting the basal board and the flexible board, a thickness of the flexible board, or a bending curvature of the flexible board.

In some embodiments, a depth of the second concave with respect to the second surface may relate to a thickness of the flexible board.

In some embodiments, an angle between a bottom surface of the first concave away from the first surface of the supporting component and a bottom surface of the second concave away from the second surface of the supporting component may be equal to or greater than 90°.

In some embodiments, the supporting component may include a first surface facing the basal board and a third surface opposite to the first surface. The concave structure may run through the supporting component from the first surface to the third surface of the supporting component.

In some embodiments, the concave structure may accommodate the whole flexible board.

In some embodiments, the basal board may include ceramic material.

In some embodiments, a width of the flexible board may be smaller than a width of the concave structure.

In some embodiments, the width of the flexible board may be smaller than half of the width of the concave structure.

In some embodiments, the detector module may further comprise a second supporting component configured to support the one or more detector elements.

In some embodiments, the second supporting component may include a plurality of positioning members configured to position the detector module within a radiation range of a radiation source that emits the rays towards the subject.

In some embodiments, the one or more detector elements may include a plurality of detector elements arranged side by side along a first direction. The detector module may be arranged side by side with a second detector module along a second direction perpendicular to the first direction. The second detector module may include a plurality of second detector elements arranged side by side along the first direction. Each second detector element may include a second flexible board. The flexible boards of the detector module and the second flexible boards of the second detector module may be arranged at intervals along the first direction.

In some embodiments, the concave structures of the detector module and the second concave structures of the second detector module may be arranged at intervals along the first direction.

In some embodiments, for each detector element, along the first direction, the width of the concave structure of the detector element may be larger than a sum of the width of its flexible board and the width of the second flexible board of the second detector element opposite to the detector element, such that its flexible board and the second flexible board are both accommodated in the concave structure.

In some embodiments, each detector element of the detector module may be arranged opposite to one second detector element of the second detector module along the second direction. For each detector element, the concave structure of the detector element may be spatially communicated with the second concave structure of the second detector element opposite to the detector element for forming a target concave structure, and the flexible board of the detector element and the second flexible board of the second detector element may be accommodated with in the target concave structure.

In some embodiments, each detector element of the detector module may be arranged opposite to one second detector element of the second detector module along the second direction. For each detector element, the concave structure of the detector element may be further configured to accommodate a portion of its flexible board and a portion of the second flexible board of the second detector element opposite to the detector element. Another portion of the flexible board of the detector element may be accommodated in the second concave structure of the second detector element opposite to the detector element.

According to the invention, a method according to claim 15 for assembling a detector module is provided. The method may include assembling one or more detector elements. Each of the one or more detector elements may include a detector crystal, a basal board, a supporting component, and a flexible board, the supporting component includes a concave structure, a first surface facing the basal board, and a second surface adjacent to the first surface, the concave structure includes a first concave and a second concave, the first concave is formed with respect to the first surface of the supporting component and configured to accommodate a first portion of the flexible board, the second concave is formed with respect to the second surface of the supporting component and configured to accommodate a second portion of the flexible board. Each of the one or more detector elements is assembled by performing the following operations. Mounting the detector crystal on a side of the basal board. The basal board is installed on the supporting component. At least a portion of the flexible board is disposed in a concave structure of the supporting component. The one or more detector elements is installed on a second supporting component.

In some embodiments, the flexible board may be disposed on a second side of the basal board opposite to the side of the basal board.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. The drawings are not to scale. These embodiments are non-limiting exemplary embodiments, in which like reference numerals represent similar structures throughout the several views of the drawings, and wherein:
FIG. 1A is a schematic diagram illustrating an exemplary detector module according to some embodiments of the present disclosure;
FIG. 1B is a schematic diagram illustrating an exemplary detector element according to some embodiments of the present disclosure;
FIG. 2 is a schematic diagram illustrating an exemplary detector crystal according to some embodiments of the present disclosure;
FIG. 3 is a schematic diagram illustrating an exemplary assembly structure of a basal board and flexible boards according to some embodiments of the present disclosure;
FIG. 4 is a schematic diagram illustrating an exemplary supporting component according to the invention;
FIG. 5 is a schematic diagram illustrating an exemplary supporting component according to an example useful for understanding but not forming part of the presently claimed invention;
FIG. 6 is an exemplary sectional view of a supporting component, a basal board, and flexible boards according to some embodiments of the present disclosure;
FIG. 7 is a schematic diagram illustrating an exemplary second supporting component according to some embodiments of the present disclosure;
FIG. 8 is a schematic diagram illustrating exemplary adjacent detector modules according to some embodiments of the present disclosure; and
FIG. 9 is a top view of the adjacent detector modules in FIG. 8 according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the scope of the present disclosure. Thus, the present disclosure is not limited to the embodiments shown, but to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this disclosure, specify the presence of stated features, integers, steps, operations, elements, and/or components, but do not preclude the presence or addition of one or more other features, integers, steps, operations, elements, components, and/or groups thereof.

It will be understood that the terms "system," "unit," "module," "element," and/or "block" used herein are one method to distinguish different components, elements, parts, sections, or assemblies of different levels in ascending order. However, the terms may be displaced by another expression if they achieve the same purpose.

It will be understood that, although the terms "first," "second," "third," etc., may be used herein to describe various elements, these elements should not be limited by these terms. These terms are only used to distinguish one element from another. For example, a first element could be termed a second element, and, similarly, a second element could be termed a first element, without departing from the scope of example embodiments of the present invention.

Spatial and functional relationships between elements (for example, between crystal elements) are described using various terms, including "connected," "engaged," "interfaced," and "coupled." Unless explicitly described as being "direct," when a relationship between first and second elements is described in the present disclosure, that relationship includes a direct relationship where no other intervening elements are present between the first and second elements, and also an indirect relationship where one or more intervening elements are present (either spatially or functionally) between the first and second elements. In contrast, when an element is referred to as being "directly" connected, engaged, interfaced, or coupled to another element, there are no intervening elements present. Other words used to describe the relationship between elements should be interpreted in a like fashion (e.g., "between," versus "directly between," "adjacent," versus "directly adjacent," etc.). As used herein, the term "and/or" includes any and all combinations of one or more of the associated listed items.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

Usually, the photon counting detector includes a plurality of detector modules arranged side by side along a direction. It is necessary to reduce a distance between adjacent detector modules as much as possible to reduce the distortion of data collected in a region between the adjacent detector modules.

Conventionally, in order to solve the above-mentioned problems, a flexible board is used for carrying wires for transmitting detection signals, and the flexible board needs to be embedded in a basal board, drawn out from a side surface of the basal board facing an adjacent detector module, and bent towards a side surface of a supporting component for supporting the basal board to reduce the distance between adjacent detector modules. However, due to mechanical stress, there is a protrusion at a corner of the flexible board and the flexible board itself has a thickness, resulting in that the distance between adjacent detector modules is relatively large. In addition, flexible boards between adjacent detector modules are usually squeezed, which can reduce the reliability of the flexible boards and the wires in the flexible boards.

According to one aspect of the present disclosure, a detector module of a photon counting detector may be provided. The detector module may include one or more detector elements. Each detector element may include a detector crystal, a basal board, a supporting component, and a flexible board. The detector crystal may be mounted on a first side of the basal board and configured to receive rays from a subject and generate a detection signal based on the rays. The supporting component may be configured to support the basal board. The supporting component may include a concave structure for accommodating at least a portion of the flexible board. In some embodiments, the flexible board may be located on a second side of the basal board opposite to the first side of the basal board (e.g., the second side may be the bottom side of the basal board). Different from the conventional photon counting detector, at least a portion of the flexible board is accommodated in the concave structure of the supporting component and, in some embodiments, the flexible board disclosed herein may be located on the second side of the basal board, which may reduce or avoid squeezing the flexible board and reduce the distance between adjacent detector modules, and improve the data collection performance and the reliability of the flexible board and the wire in the flexible board.

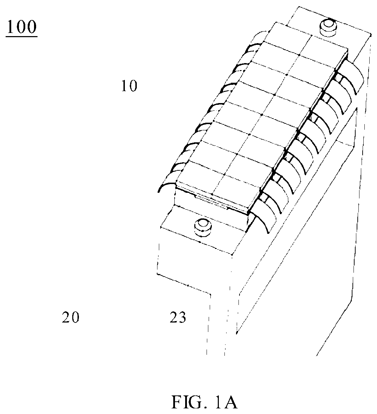

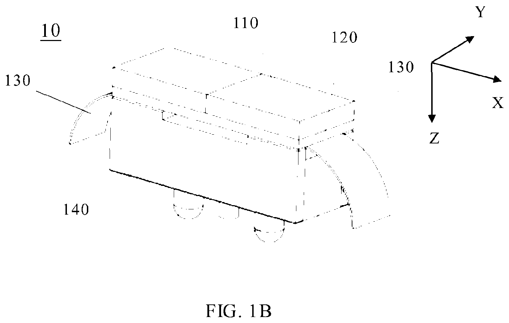

FIG. 1A is a schematic diagram illustrating an exemplary detector module 100 according to some embodiments of the present disclosure. FIG. 1B is a schematic diagram illustrating an exemplary detector element 10 according to some embodiments of the present disclosure. The detector module 100 may be configured to detect photons. The detector module 100 may be a component of a medical imaging device such as an X-ray scanner, a computed tomography (CT) scanner, a single photon emission computed tomography (SPECT) scanner, etc.

As shown in FIG. 1A and 1B, the detector module 100 may include a plurality of detector elements 10. Each detector element 10 may include a detector crystal 110, a basal board 120, one or more flexible boards 130, and a supporting component 140. For illustration purposes, a detector element including two flexible boards 130 is described hereinafter as an example. In some embodiments, a detector element may only include one flexible board or more than two flexible boards.

The detector crystal 110 may be configured to receive rays from a subject and generate a detection signal based on the rays. The rays may be radioactive rays that are emitted by a radiation source to the subject and pass through the subject. The detection signal may be used for generate or provide image data (e.g., a medical image) relating to the subject. In some embodiments, the subject may include a biological subject and/or a non-biological subject. For example, the subject may include a specific portion of a body, such as the head, the thorax, the abdomen, or the like, or a combination thereof. As another example, the subject may be a man-made composition of organic and/or inorganic matters that are with or without life.

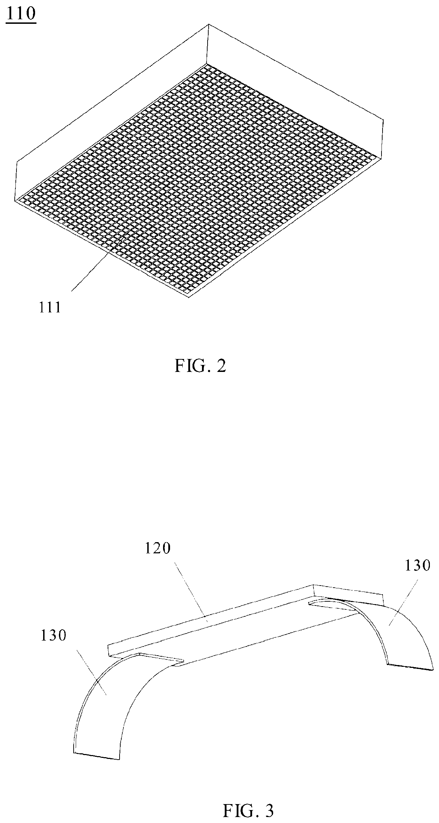

The detector crystal 110 may be mounted on a first side of the basal board 120. In some embodiments, the two flexible boards 130 may be located on a second side of the basal board 120 opposite to the first side of the basal board 120. For example, as shown FIG. 3, the two flexible boards 130 may be located on the bottom side of the basal board 120.

As used herein, a surface of the detector crystal 110 that receives rays from the subject is referred to as an incident plane; a width direction of the detector crystal 110 refers to a direction along which the short side of the incident plane extends; a length direction of the detector crystal 110 refers to a direction along which the long side of the incident plane extends; and a thickness direction of the detector crystal 110 refers to a direction along which a side of the detector crystal 110 perpendicular to the incident plane extends.

For example, referring to FIG. 1B, the top surface of the detector crystal 110 is referred to as an incident plane, the length direction is parallel to an X-axis direction, the width direction is parallel to a Y-axis direction, and the thickness direction is parallel to a Z-axis direction. The width directions, the length directions, and the thickness directions of the basal board 120 and the supporting component 140 may be the same as the width direction, the length direction, and the thickness direction of the detector crystal 110, respectively. The width direction of a flexible board 130 may be the same as the width direction of the detector crystal 110. The length direction of a flexible board 130 refers to a direction along which the long side of the flexible board 130 extends. The thickness direction of a flexible board 130 refers to a direction along which the shortest side of the flexible board 130 extends.

In some embodiments, the width of the basal board 120 may be equal to the width of the detector crystal 110.

In some embodiments, each detector element 10 may include a signal transmission channel. The signal transmission channel may include a first portion within the basal board 120 and a second portion within the flexible boards 130. The first portion of the signal transmission channel may be configured to transmit the detection signal from the detector crystal 110 to the second portion. The second portion of the signal transmission channel may be configured to transmit the detection signal to a signal processor.

In some embodiments, the detector crystal 110 may directly transmit the detection signal to the first portion within the basal board 120. Alternatively, the detector element 10 may include a chip mounted between the detector crystal 110 and the basal board 120 configured to transmit the detection signal from the detector crystal 110 to the first portion within the basal board 120. For example, FIG. 2 is a schematic diagram illustrating an exemplary detector crystal according to some embodiments of the present disclosure. As shown in FIG. 2, the detector crystal 110 may include a pixel surface 111. The chip may be electrically connected to the pixel surface 111 and the first portion. For example, the chip may be connected to the pixel surface 111 via conductive gel, and may be soldered to the first portion, so that the detection signal may be transmitted from the detector crystal 110 to the first portion via the chip.

In some embodiments, the first portion and the second portion may include the same type of wire or different types of wires. For example, the first portion may include a tungsten wire, and the second portion may include a copper wire.

In some embodiments, the signal transmission channel may further include a third portion electrically connected to the first portion and the second portion of the signal transmission channel. The detection signal may be transmitted from the first portion of the signal transmission channel to the second portion of the signal transmission channel via the third portion. The third portion may be located outside the basal board 120 and the flexible boards 130. For example, the third portion may include a first section extending from the first portion and a second section extending from the second portion. In some embodiments, the first section and the second section may be connected via various connection manners to transmit the detection signal. Exemplary connection manners may include a welding connection, a clamping connection, a bonding connection, etc. For example, wires in the first section and the second section may be electrically connected via solder joints. As another example, the first section may include a first interface, the second section may include a second interface, and the first interface and the second interface may be clamped. As still another example, the first section and the second section may be bonded by conductive gel.

In some embodiments, a portion of each flexible board 130 may be connected to the basal board 120 by ways such as bonding. For example, FIG. 3 is a schematic diagram illustrating an exemplary assembly structure of a basal board and flexible boards according to some embodiments of the present disclosure. As shown in FIG. 3, one end of each flexible board 130 along the length direction of the flexible board 130 may be connected to the basal board 120, and the other end of the flexible board 130 may be connected to a signal processor (not shown in figures).

In some embodiments, the basal board 120 may include organic material. In some embodiments, the basal board 120 may include ceramic material. In some embodiments, the basal board 120 may be configured to transfer heat generated by the detector crystal 110 to the supporting component 140. The basal board 120 made of ceramic material has good thermal conductivity, high stability, and is not easily deformed. Since the ceramic material is non-conductive, and the wires are arranged inside the basal board 120, which has high safety.

In some embodiments, the flexible boards 130 may include flexible material. Flexible material refers to material with certain deformation properties (e.g., being bendable or deformable). Exemplary flexible materials may include a polyimide, a mylar, or the like. In some embodiments, the flexible boards 130 may be non-conductive, and the wires are arranged inside the flexible boards 130, which has high safety.

The widths of each flexible board 130 may be smaller than the width of the basal board 120. In some embodiments, the width of each flexible board 130 may be smaller than a width of the corresponding concave structure for accommodating the flexible board 130.

In some embodiments, the supporting component 140 may be configured to support the basal board 120. The supporting component 140 may include two concave structures (also referred to as first concave structures) each of which is used for accommodating at least a portion of one of the flexible boards 130. For example, when the basal board 120 connected with the flexible boards 130 shown in FIG. 3 is assembled on the supporting component 140 to form the detector element 10 shown in FIG. 1B, the flexible boards 130 may be bent toward the Z-axis direction and partially accommodated in the concave structures of the supporting component 140. In some embodiments, each concave structure may accommodate a whole flexible board 130.

In some embodiments, the supporting component 140 may include a first surface facing the basal board 120 and a second surface adjacent to the first surface. In some embodiments, the second surface may be any surface of the supporting component 140 adjacent to the first surface.

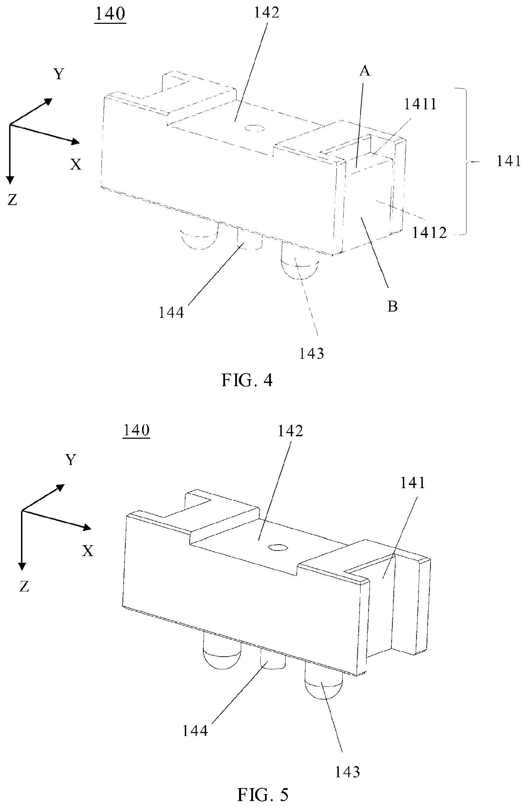

FIG. 4 is a schematic diagram illustrating an exemplary supporting component 140 according to the invention. As shown in FIG. 4, the first surface is a surface of the supporting component 140 parallel to the XY plane (i.e., the top surface of the supporting component 140) facing the basal board 120, and the second surface is two surfaces of the supporting component 140 parallel to the YZ plane (i.e., the left and right side surfaces of the supporting component 140).

For illustration purposes, a concave structure 141 for accommodating one flexible board 130 is described hereinafter. As shown in FIG. 4, the concave structure 141 includes a first concave 1411 and a second concave 1412. The first concave 1411 is formed with respect to the first surface of the supporting component 140 and configured to accommodate a first portion of the flexible board 130. The second concave 1412 is formed with respect to the second surface of the supporting component 140 and configured to accommodate a second portion of the flexible board 130. The first portion may be a portion of the flexible board 130 parallel or approximately parallel to the first surface of the supporting component 140, the second portion may be bent towards the second surface relative to the first portion. For example, the second portion may be approximately perpendicular to the first portion and, and the second portion may be parallel or approximately parallel to the second surface of the supporting component 140. The first portion may be closer to the basal board 120 than the second portion. The first concave 1411 may be a portion of the concave structure 141 extending from the first surface along the Z-axis direction. The second concave 1411 may be a portion of the concave structure 141 extending from the second surface along the X-axis direction. A width of the concave structure 141 may be smaller than the width of the supporting component 140. The widths of the first concave 1411 and the second concave 1412 may be larger than the width of the flexible board 130.

In some embodiments, a depth of the first concave 1411 with respect to the first surface of the supporting component 140 (i.e., a depth of the first concave 1411 along the Z-axis direction) may relate to a thickness of a connection member (e.g., a thickness of a solder joint or conductive gel along the Z-axis direction) for connecting the basal board 120 and the flexible board 130, a thickness of the flexible board 130, a bending curvature of the flexible board 130, or the like, or any combination thereof. When the flexible board 130 is bent towards the second surface, the flexible board 130 may be not in contact with a bottom surface A of the first concave 1411 away from the first surface. When the flexible board 130 is bent towards the second surface, a surface of the flexible board 130 facing the bottom surface A may be in contact with the bottom surface A of the first concave 1411 away from the first surface.

In some embodiments, a depth of the second concave 1412 with respect to the second surface (i.e., a depth of the first concave 1412 along the X-axis direction) may relate to the thickness of the flexible board 130, the bending curvature of the flexible board 130, or the like, or any combination thereof. In some embodiments, the depth of the second concave 1412 with respect to the second surface may be larger than or equal to the thickness of the flexible board 130. As shown in FIG. 4, when the flexible board 130 is bent towards the second surface, a portion of the flexible board 130 may be attached to a bottom surface B of the second concave 1412 away from the second surface, and the second portion of the flexible board 130 may be accommodated in the second concave 1412. In this way, when the detector module 100 and another detector module are assembled side by side in the X-axis direction, the surfaces of the first detector module 100 and another detector module opposite to each other can be directly contacted.

In some embodiments, an angle between the bottom surface A of the first concave away from the first surface of the supporting component 140 and the bottom surface B of the second concave away from the second surface of the supporting component 140 may be equal to or greater than 90°. In some embodiments, as shown in FIG. 4, the bottom surface A may be perpendicular to the bottom surface B, and the first concave 1411 and the second concave 1412 may be a cuboid, which may facilitate the manufacturing and processing of the supporting component 140. In some embodiments, the angle between the bottom surface A and the bottom surface B may be greater than 90°. For example, the bottom surface A may be inclined with respect to the XY plane, and the bottom surface B may be a surface parallel to the YZ plane. As another example, the bottom surface A may be a surface parallel to the XY plane, and the bottom surface B may be inclined with respect to the YZ plane. As still another example, the bottom surface A may be inclined with respect to the XY plane, the bottom surface B may be inclined with respect to the YZ plane, and the angle between the bottom surface A and the bottom surface B may be an obtuse angle. In some embodiments, the bottom surface A and the bottom surface B may be arc surfaces, to match an arc surface of the flexible board 130 when the flexible board 130 is bent. The shape and size of the concave structure 141 is not limited here, it only needs to ensure that at least the portion of the flexible board 130 is accommodated in the concave structure 141. Preferably, the size of the concave structure 141 may be as small as possible when ensuring that at least the portion of the flexible board 130 is accommodated is accommodated in the concave structure 141, so as to facilitate the heat dissipation of the supporting component 140.

In some embodiments, a transition arc may be provided at the connection part between the bottom surface A and the bottom surface B to reduce the resistance of the connection part to the flexible board 130.

FIG. 5 is a schematic diagram illustrating an exemplary supporting component 140 according to an example useful for understanding but not forming part of the present invention. In some embodiments, as shown in FIG. 5, the supporting component 140 may include a third surface opposite to the first surface, for example, the third surface may be the bottom surface of the supporting component 140 away from the basal board 120. The concave structure 141 may run through the supporting component 140 from the first surface to the third surface of the supporting component 140. In this case, a depth of the concave structure 141 along the Z-axis direction may be regarded as the aforementioned depth of the first concave 1411 with respect to the first surface of the supporting component 140, and a depth of the concave structure 141 with respect to the second surface may be regarded as the aforementioned depth of the second concave 1412 with respect to the second surface. In some embodiments, as shown in FIG. 5, the concave structure 141 may be U-shaped. In some embodiments, the concave structure 141 may be in other shapes such as a trapezoid.

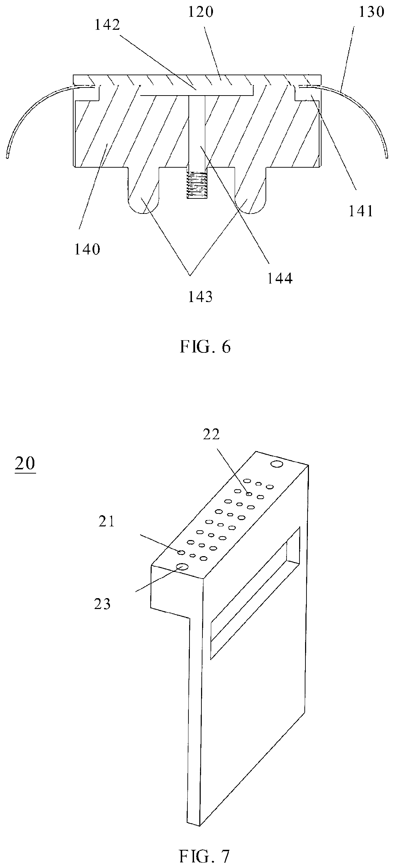

FIG. 6 is an exemplary sectional view of a supporting component, a basal board, and flexible boards according to some embodiments of the present disclosure. As shown in FIGs. 4-6, the supporting component 140 may further include a second concave structure 142. The second concave structure 142 may be formed with respect to the first surface of the supporting component 140 and configured to accommodate one or more filter capacitors for stabilizing the voltage of the chip.

In some embodiments, the detector module 100 may further comprise a second supporting component 20 configured to support the one or more detector elements 10 as shown in FIG. 1. FIG. 7 is a schematic diagram illustrating an exemplary second supporting component 20 according to some embodiments of the present disclosure.

In some embodiments, the first supporting component 140 may further include one or more first positioning members 143 and one or more first fixed members 144. For example, as shown in FIGs, 4-6, the first supporting component 140 may further include two first positioning members 143 and one first fixed member 144. As shown in FIG. 7, the second supporting component 20 may include one or more second positioning members 21 corresponding to the one or more first positioning members 143 and one or more second fixed members 22 corresponding to the one or more first fixed members 144. The first supporting component 140 may be positioned on the second supporting component 20 via the one or more first positioning members 143 and the one or more second positioning members 21. For example, the one or more first positioning members 143 may be one or more pins and the one or more second positioning members 21 may be one or more holes each of which is matched with one of the one or more pins. As another example, the one or more first positioning members 143 may be one or more holes and the one or more second positioning members 21 may be one or more pins each of which is matched with one of the one or more holes. The first supporting component 140 may be fixed on the second supporting component 20 via the one or more first fixed members 144 and the one or more second fixed members 22. For example, a first fixed member 144 may be a hollow structure protruding from the third surface of the first supporting component 140. In some embodiments, the hollow structure may run through at least a portion of the supporting component 140. In some embodiments, an end of the first fixed member 144 away from the first surface of the first supporting component 140 may have internal thread. A second fixed member 22 may be a hole matching with the first fixed member 144. A portion of the first fixed member 144 protruding from the third surface may be installed in one second fixed member 22, and a screw may be inserted into the first fixing member 144 from an end of the second supporting component 20 away from the first supporting component 140 to fix the second supporting component 20 and the first supporting component 140. In this way, the first supporting component 140 may be quickly positioned and fixed to the second supporting component 20.

In some embodiments, as shown in FIGs, 1 and 7, the second supporting component 20 may further include a plurality of second positioning members 23. The plurality of second positioning members 23 may be configured to position the detector module 100 within a radiation range of a radiation source that emits the rays towards the subject. For example, the plurality of second positioning members 23 may be pins shown in FIG. 1 or holes shown in FIG. 7. The radiation source may be aligned with a component (e.g., a metal bracket) in advance, when the detector module 100 is installed on the component via the plurality of second positioning members 23, the detector module 100 may be located within the radiation range of the radiation source.

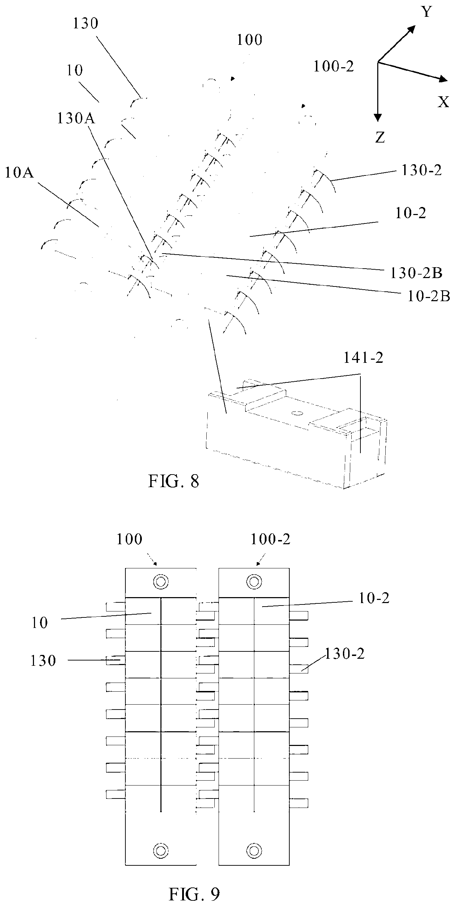

FIG. 8 is a schematic diagram illustrating exemplary adjacent detector modules 100 according to some embodiments of the present disclosure. FIG. 9 is a top view of the adjacent detector modules in FIG. 8 according to some embodiments of the present disclosure.

As shown in FIG. 8 and FIG. 9, the detector module 100 (also referred to as a first detector module 100) may be arranged side by side with a second detector module 100-2 along a second direction (i.e., the X-axis direction) perpendicular to the first direction. The second detector module 100-2 may be the same as or similar to the first detector module 100. The second detector module 100-2 may include a plurality of second detector elements 10-2 arranged side by side along the first direction. Each second detector element 10-2 may include a second flexible board 130-2 and a second concave structure 141-2 for accommodating at least one a portion of the second flexible board 130-2. For illustration purposes, each second detector element 10-2 including two flexible boards 130-2 is described hereinafter.

The flexible boards 130 (also referred to as first flexible boards 130) of the first detector module 100 and the second flexible boards 130-2 of the second detector module 100-2 may be arranged at intervals along the first direction. When the first detector module 100 and the second detector module 100-2 are assembled side by side in the X-axis direction, the flexible boards 130 and 130-2 opposite to each other may be arranged at intervals. In some embodiments, the concave structures (141) of the detector module (100) and the second concave structures (141-2) of the second detector module (100-2) may be arranged at intervals along the first direction. In some embodiments, for each detector element (10), along the first direction, the width of the concave structure (141) of the detector element (10) may be larger than a sum of the width of its flexible board (130) and the width of the second flexible board (130-2) of the second detector element (10-2) opposite to the detector element (10), such that its flexible board (130) and the second flexible board (130-2) are both accommodated in the concave structure (141). In some embodiments, each detector element (10) of the detector module (100) may be arranged opposite to one second detector element (10-2) of the second detector module (100-2) along the second direction. For each detector element (10), the concave structure (141) of the detector element (10) may be spatially communicated with the second concave structure (141-2) of the second detector element (10-2) opposite to the detector element (10) for forming a target concave structure, and the flexible board (130) of the detector element (10) and the second flexible board (130-2) of the second detector element (10-2) may be accommodated with in the target concave structure. In this way, the distance between the first detector module 100 and the second detector module 100-2 may be effectively reduced, the flexible boards 130 and 130-2 opposite to each other do not be squeezed or collided, thereby improving the data collection and transmission performance.

In some cases, the concave structure of a flexible board of a detector element can only accommodate a portion of the flexible board, and the other portion of the flexible board may be accommodated into a concave structure of another detector element opposite to the detector element, to reduce the distance between the first detector module 100 and the second detector module 100-2 as much as possible. Accordingly, a width of a concave structure may be larger than a sum of widths of a first flexible board 130 and a second flexible board 130-2. For example, the first flexible boards 130 and the second flexible boards 130-2 may have a same size, and the width of each of the first flexible boards 130 and the second flexible boards 130-2 may be smaller than half of the width of the concave structure.

Specifically, each detector element 10 (also referred to as first detector element 10) of the first detector module 100 may be arranged opposite to one second detector element 10-2 of the second detector module 100-2 along the second direction. For each first detector element 10, the concave structure of the first detector element 10 may be configured to accommodate a portion of its first flexible board 130 and a portion of the second flexible board 130-2 of the second detector element 10-2 opposite to the first detector element 10. After the first detector module 100 and the second detector module 100-2 are assembled, another portion of the first flexible board 130 of the first detector element 10 may be accommodated in the second concave structure of the second detector element 10-2 opposite to the first detector element 10. For example, as shown in FIG. 8, after the first detector module 100 and the second detector module 100-2 are assembled, the concave structure of the first detector element 10A may accommodate a portion of its first flexible board 130A and a portion of the second flexible board 130-2B of the second detector element 10-2B opposite to the first detector element 10A; the concave structure of the second detector element 10-2B may accommodate another portion of its second flexible board 130-2B and another portion of the first flexible board 130A of the first detector element 10A. In this way, each two flexible boards 130 and 130-2 opposite to each other may be accommodated in same concave structures and do not be squeezed or collided, the distance between the first detector module 100 and the second detector module 100-2 may be reduced, thereby further improving the data collection performance.

As described elsewhere in the present disclosure, a flexible board of a conventional photon counting detector needs to be embedded in a basal board, drawn out from a surface of the basal board facing an adjacent detector module, and bent towards a surface of a supporting component for supporting the basal board of the basal board to reduce the distance between adjacent detector modules, resulting in that the distance between adjacent detector modules is relatively large. In addition, flexible boards between adjacent detector modules are usually squeezed, which can reduce the reliability of the flexible boards and the wires in the flexible boards.

Compared with the conventional photon counting detector, according to some embodiments of the present disclosure, at least a portion of each flexible board may be accommodated in the concave structure of the corresponding supporting component, and in some embodiments, each flexible board of each detector module may be located on the second side of the basal board and, which may reduce or avoid squeezing the flexible boards and reduce the distance between adjacent detector modules, and improving the data collection performance and the reliability of the flexible board and the wire in the flexible board.

It should be noted that the detector module 100 described above is merely provided for illustration purposes, and not intended to limit the scope of the present disclosure. In some embodiments, the two flexible boards 130 may be located on a third side of the basal board 120 other than the first side and the second side. For example, the two flexible boards 130 may be located on two surfaces of the basal board 120 parallel to the second surface of the supporting component 140. In this case, the two surfaces of the basal board 120 may include concave structures for accommodating a portion of the flexible boards 130. In some embodiments, the concave structure 141 may be located other portions of the supporting component 130.

According to another aspect of the present invention, a method for assembling a detector module is provided. The method includes assembling one or more detector elements. Each detector element includes a detector crystal, a basal board, a supporting component, and a flexible board, the supporting component includes a concave structure, a first surface facing the basal board, and a second surface adjacent to the first surface, the concave structure includes a first concave and a second concave, the first concave is formed with respect to the first surface of the supporting component and configured to accommodate a first portion of the flexible board, the second concave is formed with respect to the second surface of the supporting component and configured to accommodate a second portion of the flexible board. Each detector element is assembled by performing the following operations. The detector crystal is mounted on a first side of the basal board. The flexible board may be disposed on a second side of the basal board opposite to the first side of the basal board. The basal board is installed on the supporting component. At least a portion of the flexible board is disposed in a concave structure of the supporting component. The one or more detector elements is installed on a second supporting component. Then, the method may include assembling the one or more detector elements to a second supporting component to obtain the detector module. In some embodiments, the method may further include assembling a plurality of detector modules along a direction to obtain a photon counting detector.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the scope of the exemplary embodiments of this disclosure

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this disclosure are not necessarily all referring to the same embodiment. Furthermore, the particular features, structures, or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.), or combining software and hardware implementation that may all generally be referred to herein as a "unit," "module," or "system." Furthermore, aspects of the present disclosure may take the form of a computer program product embodied in one or more computer readable media having computer readable program code embodied thereon.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various inventive embodiments. This method of disclosure, however, is not to be interpreted as reflecting an intention that the claimed subject matter requires more features than are expressly recited in each claim. Rather, inventive embodiments lie in less than all features of a single foregoing disclosed embodiment.

In some embodiments, the numbers expressing quantities or properties used to describe and claim certain embodiments of the application are to be understood as being modified in some instances by the term "about," "approximate," or "substantially." For example, "about," "approximate," or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described. The scope of the invention is defined by the appended claims.

## Claims

1. A detector module (100), comprising one or more detector elements (10), each of the one or more detector elements (10) including a detector crystal (110) (110), a basal board (120), a supporting component (140), and a flexible board (130), wherein:
the detector crystal (110) is mounted on a side of the basal board (120) and configured to receive rays from a subject and generate a detection signal based on the rays;
the supporting component (140) is configured to support the basal board (120), and the supporting component (140) includes a concave structure (141), a first surface facing the basal board (120), and a second surface adjacent to the first surface,
**characterized in that**
the concave structure (141) includes a first concave (1411) and a second concave (1412), the first concave (1411) is formed with respect to the first surface of the supporting component (140) and configured to accommodate a first portion of the flexible board (130), the second concave (1412) is formed with respect to the second surface of the supporting component (140) and configured to accommodate a second portion of the flexible board (130).

2. The detector module (100) of claim 1, wherein the flexible board (130) is located on a second side of the basal board (120) opposite to the side of the basal board (120).

3. The detector module (100) of claim 1 or claim 2, wherein each of the one or more detector elements (10) includes a signal transmission channel,
the signal transmission channel includes a first portion within the basal board (120) and a second portion within the flexible board (130),
the first portion of the signal transmission channel is configured to transmit the detection signal from the detector crystal (110) to the second portion, and
the second portion of the signal transmission channel is configured to transmit the detection signal to a signal processor.

4. The detector module (100) of claim 1, wherein a depth of the first concave (1411) with respect to the first surface of the supporting component (140) relates to at least one of a thickness of a connection member for connecting the basal board (120) and the flexible board (130), a thickness of the flexible board (130), or a bending curvature of the flexible board (130), and a depth of the second concave (1412) with respect to the second surface relates to a thickness of the flexible board (130).

5. The detector module (100) of any one of claims 1-4, wherein an angle between a bottom surface of the first concave (1411) away from the first surface of the supporting component (140) and a bottom surface of the second concave (1412) away from the second surface of the supporting component (140) is equal to or greater than 90°.

6. The detector module (100) of any one of claims 1-5, wherein a bottom surface (A) of the first concave (1411) away from the first surface of the supporting component (140) and a bottom surface (B) of the second concave (1412) away from the second surface of the supporting component (140) are arc surfaces.

7. The detector module (100) of any one of claims 1-5, wherein the first portion is a portion of the flexible board (130) parallel or approximately parallel to the first surface of the supporting component (140), and the second portion of the flexible board (130) is bent towards the second surface relative to the first portion.

8. The detector module (100) of any one of claims 1-5, wherein a surface of the first portion of the flexible board (130) facing a bottom surface (A) of the first concave (1411) away from the first surface is not in contact with the bottom surface (A) of the first concave (1411), and the second portion of the flexible board (130) is attached to a bottom surface (B) of the second concave (1412) away from the second surface.

9. The detector module (100) of any one of claims 1-8, wherein the supporting component (140) further includes a second concave structure (142), the second concave structure (142) is formed with respect to the first surface of the supporting component (140) and configured to accommodate one or more filter capacitors for stabilizing a voltage of a chip.

10. The detector module (100) of any one of claims 1-9, wherein
the one or more detector elements (10) include a plurality of detector elements (10) arranged side by side along a first direction,
the detector module (100) is arranged side by side with a second detector module (100-2) along a second direction perpendicular to the first direction,
the second detector module (100-2) includes a plurality of second detector elements (10-2) arranged side by side along the first direction, each second detector element (10-2) including a second flexible board (130-2), and
the flexible boards (130) of the detector module (100) and the second flexible boards (130-2) of the second detector module (100-2) are arranged at intervals along the first direction.

11. The detector module of claim 10, wherein each second detector element (10-2) further includes a second concave structure (141-2) for accommodating at least one a portion of the second flexible board (130-2), and
the concave structures (141) of the detector module (100) and the second concave structures (141-2) of the second detector module (100-2) are arranged at intervals along the first direction.

12. The detector module of claim 10, each second detector element (10-2) further includes a second concave structure (141-2) for accommodating at least one a portion of the second flexible board (130-2),
each detector element (10) of the detector module (100) is arranged opposite to one second detector element (10-2) of the second detector module (100-2) along the second direction,
for each detector element (10),
the concave structure (141) of the detector element (10) is spatially communicated with the second concave structure (141-2) of the second detector element (10-2) opposite to the detector element (10) for forming a target concave structure, and the flexible board (130) of the detector element (10) and the second flexible board (130-2) of the second detector element (10-2) are accommodated within the target concave structure.

13. The detector module of claim 10, wherein each detector element (10) of the detector module (100) is arranged opposite to one second detector element (10-2) of the second detector module (100-2) along the second direction,
for each detector element (10),
along the first direction, the width of the concave structure (141) of the detector element (10) is larger than a sum of the width of its flexible board (130) and the width of the second flexible board (130-2) of the second detector element (10-2) opposite to the detector element (10), such that its flexible board (130) and the second flexible board (130-2) are both accommodated in the concave structure (141).

14. The detector module (100) of claim 10 or claim 12, wherein each detector element (10) of the detector module (100) is arranged opposite to one second detector element (10-2) of the second detector module (100-2) along the second direction,
for each detector element (10),
the concave structure (141) of the detector element (10) is further configured to accommodate a portion of its flexible board (130) and a portion of the second flexible board (130-2) of the second detector element (10-2) opposite to the detector element (10), and
another portion of the flexible board (130) of the detector element (10) is accommodated in the second concave structure (141-2) of the second detector element (10-2) opposite to the detector element (10).

15. A method for assembling a detector module (100), comprising
assembling one or more detector elements (10), wherein each of the one or more detector elements (10) includes a detector crystal (110), a basal board (120), a supporting component (140), and a flexible board (130), the supporting component (140) includes a concave structure (141), a first surface facing the basal board (120), and a second surface adjacent to the first surface, the concave structure (141) includes a first concave (1411) and a second concave (1412), the first concave (1411) is formed with respect to the first surface of the supporting component (140) and configured to accommodate a first portion of the flexible board (130), the second concave (1412) is formed with respect to the second surface of the supporting component (140) and configured to accommodate a second portion of the flexible board (130), and the assembling one or more detector elements (10) includes:
mounting the detector crystal (110) on a side of the basal board (120);
installing the basal board (120) on the supporting component (140); and
disposing at least a portion of the flexible board (130) in the concave structure (141) of the supporting component (140); and
installing the one or more detector elements (10) on a second supporting component (20).

## Patentansprüche

1. Detektormodul (100), das ein oder mehrere Detektorelemente (10) umfasst, wobei jedes des einen oder der mehreren Detektorelemente (10) einen Detektorkristall (110), eine Grundplatte (120), eine Trägerkomponente (140) und eine flexible Platte (130) beinhaltet, wobei:
der Detektorkristall (110) auf einer Seite der Grundplatte (120) befestigt und dazu konfiguriert ist, Strahlen von einem Subjekt zu empfangen und basierend auf den Strahlen ein Detektionssignal zu erzeugen;
die Trägerkomponente (140) dazu konfiguriert ist, die Grundplatte (120) zu tragen, und die Trägerkomponente (140) eine konkave Struktur (141), eine erste Oberfläche, die der Grundplatte (120) zugewandt ist, und eine zweite Oberfläche, die an die erste Oberfläche angrenzt, beinhaltet,
**dadurch gekennzeichnet, dass**
die konkave Struktur (141) eine erste Konkavität (1411) und eine zweite Konkavität (1412) beinhaltet, wobei die erste Konkavität (1411) in Bezug auf die erste Oberfläche der Trägerkomponente (140) gebildet und dazu konfiguriert ist, einen ersten Abschnitt der flexiblen Platte (130) aufzunehmen, und die zweite Konkavität (1412) in Bezug auf die zweite Oberfläche der Trägerkomponente (140) gebildet und dazu konfiguriert ist, einen zweiten Abschnitt der flexiblen Platte (130) aufzunehmen.

2. Detektormodul (100) nach Anspruch 1, wobei sich die flexible Platte (130) auf einer zweiten Seite der Grundplatte (120) befindet, die der Seite der Grundplatte (120) gegenüberliegt.

3. Detektormodul (100) nach Anspruch 1 oder Anspruch 2, wobei jedes des einen oder der mehreren Detektorelemente (10) einen Signalübertragungskanal beinhaltet,
der Signalübertragungskanal einen ersten Abschnitt innerhalb der Grundplatte (120) und einen zweiten Abschnitt innerhalb der flexiblen Platte (130) beinhaltet,
der erste Abschnitt des Signalübertragungskanals dazu konfiguriert ist, das Detektionssignal vom Detektorkristall (110) an den zweiten Abschnitt zu übertragen, und
der zweite Abschnitt des Signalübertragungskanals dazu konfiguriert ist, das Detektionssignal an einen Signalprozessor zu übertragen.

4. Detektormodul (100) nach Anspruch 1, wobei sich eine Tiefe der ersten Konkavität (1411) in Bezug auf die erste Oberfläche der Trägerkomponente (140) auf mindestens eine einer Dicke eines Verbindungselements zum Verbinden der Grundplatte (120) und der flexiblen Platte (130), einer Dicke der flexiblen Platte (130) oder einer Biegekrümmung der flexiblen Platte (130) bezieht, und sich eine Tiefe der zweiten Konkavität (1412) in Bezug auf die zweite Oberfläche auf eine Dicke der flexiblen Platte (130) bezieht.

5. Detektormodul (100) nach einem der Ansprüche 1-4, wobei ein Winkel zwischen einer Bodenfläche der ersten Konkavität (1411) abseits der ersten Oberfläche der Trägerkomponente (140) und einer Bodenfläche der zweiten Konkavität (1412) abseits der zweiten Oberfläche der Trägerkomponente (140) gleich oder größer als 90° ist.

6. Detektormodul (100) nach einem der Ansprüche 1-5, wobei eine Bodenfläche (A) der ersten Konkavität (1411) abseits der ersten Oberfläche der Trägerkomponente (140) und eine Bodenfläche (B) der zweiten Konkavität (1412) abseits der zweiten Oberfläche der Trägerkomponente (140) Bogenflächen sind.

7. Detektormodul (100) nach einem der Ansprüche 1-5, wobei der erste Abschnitt ein Abschnitt der flexiblen Platte (130) ist, der parallel oder annähernd parallel zu der ersten Oberfläche der Trägerkomponente (140) verläuft, und der zweite Abschnitt der flexiblen Platte (130) im Verhältnis zum ersten Abschnitt in Richtung der zweiten Oberfläche gebogen ist.

8. Detektormodul (100) nach einem der Ansprüche 1-5, wobei eine Oberfläche des ersten Abschnitts der flexiblen Platte (130), die einer Bodenfläche (A) der ersten Konkavität (1411) abseits der ersten Oberfläche zugewandt ist, nicht mit der Bodenfläche (A) der ersten Konkavität (1411) in Kontakt steht, und der zweite Abschnitt der flexiblen Platte (130) an einer Bodenfläche (B) der zweiten Konkavität (1412) abseits der zweiten Oberfläche befestigt ist.

9. Detektormodul (100) nach einem der Ansprüche 1-8, wobei die Trägerkomponente (140) weiter eine zweite konkave Struktur (142) beinhaltet, wobei die zweite konkave Struktur (142) in Bezug auf die erste Oberfläche der Trägerkomponente (140) gebildet ist und dazu konfiguriert ist, einen oder mehrere Filterkondensatoren zum Stabilisieren einer Spannung eines Chips aufzunehmen.

10. Detektormodul (100) nach einem der Ansprüche 1-9, wobei
das eine oder die mehreren Detektorelemente (10) eine Vielzahl von Detektorelementen (10) beinhalten, die entlang einer ersten Richtung Seite an Seite angeordnet sind,
das Detektormodul (100) Seite an Seite mit einem zweiten Detektormodul (100-2) entlang einer zweiten Richtung senkrecht zur ersten Richtung angeordnet ist,
das zweite Detektormodul (100-2) eine Vielzahl von zweiten Detektorelementen (10-2) beinhaltet, die Seite an Seite entlang der ersten Richtung angeordnet sind, wobei jedes zweite Detektorelement (10-2) eine zweite flexible Platte (130-2) beinhaltet, und
die flexiblen Platten (130) des Detektormoduls (100) und die zweiten flexiblen Platten (130-2) des zweiten Detektormoduls (100-2) in Abständen entlang der ersten Richtung angeordnet sind.

11. Detektormodul nach Anspruch 10, wobei jedes zweite Detektorelement (10-2) weiter eine zweite konkave Struktur (141-2) beinhaltet, um mindestens einen Abschnitt der zweiten flexiblen Platte (130-2) aufzunehmen, und
die konkaven Strukturen (141) des Detektormoduls (100) und die zweiten konkaven Strukturen (141-2) des zweiten Detektormoduls (100-2) in Abständen entlang der ersten Richtung angeordnet sind.

12. Detektormodul nach Anspruch 10, wobei jedes zweite Detektorelement (10-2) weiter eine zweite konkave Struktur (141-2) beinhaltet, um mindestens einen Abschnitt der zweiten flexiblen Platte (130-2) aufzunehmen,
jedes Detektorelement (10) des Detektormoduls (100) entlang der zweiten Richtung einem zweiten Detektorelement (10-2) des zweiten Detektormoduls (100-2) gegenüberliegend angeordnet ist,
für jedes Detektorelement (10),
die konkave Struktur (141) des Detektorelements (10) räumlich mit der zweiten konkaven Struktur (141-2) des zweiten Detektorelements (10-2), das dem Detektorelement (10) gegenüberliegt, verbunden ist, um eine konkave Zielstruktur zu bilden, und die flexible Platte (130) des Detektorelements (10) und die zweite flexible Platte (130-2) des zweiten Detektorelements (10-2) innerhalb der konkaven Zielstruktur aufgenommen sind.

13. Detektormodul nach Anspruch 10, wobei jedes Detektorelement (10) des Detektormoduls (100) gegenüberliegend einem zweiten Detektorelement (10-2) des zweiten Detektormoduls (100-2) entlang der zweiten Richtung angeordnet ist,
für jedes Detektorelement (10),
entlang der ersten Richtung die Breite der konkaven Struktur (141) des Detektorelements (10) größer als eine Summe der Breite seiner flexiblen Platte (130) und der Breite der zweiten flexiblen Platte (130-2) des zweiten Detektorelements (10-2), das dem Detektorelement (10) gegenüberliegt, ist, sodass sowohl seine flexible Platte (130) als auch die zweite flexible Platte (130-2) in der konkaven Struktur (141) aufgenommen sind.

14. Detektormodul (100) nach Anspruch 10 oder Anspruch 12, wobei jedes Detektorelement (10) des Detektormoduls (100) gegenüberliegend einem zweiten Detektorelement (10-2) des zweiten Detektormoduls (100-2) entlang der zweiten Richtung angeordnet ist,
für jedes Detektorelement (10),
die konkave Struktur (141) des Detektorelements (10) weiter dazu konfiguriert ist, einen Abschnitt seiner flexiblen Platte (130) und einen Abschnitt der zweiten flexiblen Platte (130-2) des zweiten Detektorelements (10-2), das dem Detektorelement (10) gegenüberliegt, aufzunehmen, und
ein anderer Abschnitt der flexiblen Platte (130) des Detektorelements (10) in der zweiten konkaven Struktur (141-2) des zweiten Detektorelements (10-2), das dem Detektorelement (10) gegenüberliegt, aufgenommen ist.

15. Verfahren zum Zusammenbauen eines Detektormoduls (100), umfassend
Zusammenbauen eines oder mehrerer Detektorelemente (10), wobei jedes des einen oder der mehreren Detektorelemente (10) einen Detektorkristall (110), eine Grundplatte (120), eine Trägerkomponente (140) und eine flexible Platte (130) beinhaltet, die Trägerkomponente (140) eine konkave Struktur (141), eine der Grundplatte (120) zugewandte erste Oberfläche und eine an die erste Oberfläche angrenzende zweite Oberfläche beinhaltet, die konkave Struktur (141) eine erste Konkavität (1411) und eine zweite Konkavität (1412) beinhaltet, wobei die erste Konkavität (1411) in Bezug auf die erste Oberfläche der Trägerkomponente (140) gebildet und dazu konfiguriert ist, einen ersten Abschnitt der flexiblen Platte (130) aufzunehmen, und die zweite Konkavität (1412) in Bezug auf die zweite Oberfläche der Trägerkomponente (140) gebildet und dazu konfiguriert ist, einen zweiten Abschnitt der flexiblen Platte (130) aufzunehmen, und das Zusammenbauen eines oder mehrerer Detektorelemente (10) beinhaltet:
Befestigen des Detektorkristalls (110) auf einer Seite der Grundplatte (120);
Installieren der Grundplatte (120) auf der Trägerkomponente (140); und
Anordnen mindestens eines Abschnitts der flexiblen Platte (130) in der konkaven Struktur (141) der Trägerkomponente (140); und
Installieren des einen oder der mehreren Detektorelemente (10) auf einer zweiten Trägerkomponente (20).

## Revendications

1. Module détecteur (100) comprenant un ou plusieurs éléments détecteurs (10), chacun des un ou plusieurs éléments détecteurs (10) incluant un cristal détecteur (110), une carte de base (120), un composant de support (140) et une carte flexible (130), dans lequel :
le cristal détecteur (110) est monté sur un côté de la carte de base (120) et configuré pour recevoir des rayons provenant d'un sujet et générer un signal de détection sur la base des rayons ;
le composant de support (140) est configuré pour supporter la carte de base (120), et le composant de support (140) inclut une structure concave (141), une première surface étant orientée vers la carte de base (120), et une seconde surface étant adjacente à la première surface,
**caractérisé en ce que**
la structure concave (141) inclut une première concavité (1411) et une seconde concavité (1412), la première concavité (1411) est formée par rapport à la première surface du composant de support (140) et configurée pour loger une première partie de la carte flexible (130), la seconde concavité (1412) est formée par rapport à la seconde surface du composant de support (140) et configurée pour loger une seconde partie de la carte flexible (130).

2. Module détecteur (100) selon la revendication 1, dans lequel la carte flexible (130) est située sur un second côté de la carte de base (120) opposé au côté de la carte de base (120).

3. Module détecteur (100) selon la revendication 1 ou la revendication 2, dans lequel chacun des un ou plusieurs éléments détecteurs (10) inclut un canal de transmission de signal,
le canal de transmission de signal inclut une première partie à l'intérieur de la carte de base (120) et une seconde partie à l'intérieur de la carte flexible (130),
la première partie du canal de transmission de signal est configurée pour transmettre le signal de détection du cristal détecteur (110) à la seconde partie, et
la seconde partie du canal de transmission de signal est configurée pour transmettre le signal de détection à un processeur de signal.

4. Module détecteur (100) selon la revendication 1, dans lequel une profondeur de la première concavité (1411) par rapport à la première surface du composant de support (140) se rapporte à au moins l'une parmi une épaisseur d'un organe de connexion pour connecter la carte de base (120) et la carte flexible (130), une épaisseur de la carte flexible (130), et une courbure de flexion de la carte flexible (130), et une profondeur de la seconde concavité (1412) par rapport à la seconde surface se rapporte à une épaisseur de la carte flexible (130).

5. Module détecteur (100) selon l'une quelconque des revendications 1-4, dans lequel un angle entre une surface inférieure de la première concavité (1411) éloignée de la première surface du composant de support (140) et une surface inférieure de la seconde concavité (1412) éloignée de la seconde surface du composant de support (140) est supérieur ou égal à 90°.

6. Module détecteur (100) selon l'une quelconque des revendications 1-5, dans lequel une surface inférieure (A) de la première concavité (1411) éloignée de la première surface du composant de support (140) et une surface inférieure (B) de la seconde concavité (1412) éloignée de la seconde surface du composant de support (140) sont des surfaces arquées.

7. Module détecteur (100) selon l'une quelconque des revendications 1-5, dans lequel la première partie est une partie de la carte flexible (130) parallèle ou approximativement parallèle à la première surface du composant de support (140), et la seconde partie de la carte flexible (130) est incurvée vers la seconde surface par rapport à la première partie.

8. Module détecteur (100) selon l'une quelconque des revendications 1-5, dans lequel une surface de la première partie de la carte flexible (130) orientée vers une surface inférieure (A) de la première concavité (1411) éloignée de la première surface n'est pas en contact avec la surface inférieure (A) de la première concavité (1411), et la seconde partie de la carte flexible (130) est fixée à une surface inférieure (B) de la seconde concavité (1412) éloignée de la seconde surface.

9. Module détecteur (100) selon l'une quelconque des revendications 1-8, dans lequel le composant de support (140) inclut en outre une seconde structure concave (142), la seconde structure concave (142) est formée par rapport à la première surface du composant de support (140) et configurée pour loger un ou plusieurs condensateurs de filtrage pour stabiliser une tension d'une puce.

10. Module détecteur (100) selon l'une quelconque des revendications 1-9, dans lequel
les un ou plusieurs éléments détecteurs (10) incluent une pluralité d'éléments détecteurs (10) agencés côte à côte le long d'une première direction,
le module détecteur (100) est agencé côte à côte avec un second module détecteur (100-2) selon une seconde direction perpendiculaire à la première direction,
le second module détecteur (100-2) inclut une pluralité de seconds éléments détecteurs (10-2) agencés côte à côte le long de la première direction, chaque second élément détecteur (10-2) incluant une seconde carte flexible (130-2), et
les cartes flexibles (130) du module détecteur (100) et les secondes cartes flexibles (130-2) du second module détecteur (100-2) sont agencées à intervalles le long de la première direction.

11. Module détecteur selon la revendication 10, dans lequel chaque second élément détecteur (10-2) inclut en outre une seconde structure concave (141-2) destinée à loger au moins une partie de la seconde carte flexible (130-2), et
les structures concaves (141) du module détecteur (100) et les secondes structures concaves (141-2) du second module détecteur (100-2) sont agencées à intervalles le long de la première direction.

12. Module détecteur selon la revendication 10, chaque second élément détecteur (10-2) inclut en outre une seconde structure concave (141-2) destinée à loger au moins une partie de la seconde carte flexible (130-2),
chaque élément détecteur (10) du module détecteur (100) est agencé à l'opposé d'un second élément détecteur (10-2) du second module détecteur (100-2) le long de la seconde direction,
pour chaque élément détecteur (10),
la structure concave (141) de l'élément détecteur (10) est en communication spatiale avec la seconde structure concave (141-2) du second élément détecteur (10-2) opposé à l'élément détecteur (10) pour former une structure concave cible, et la carte flexible (130) de l'élément détecteur (10) et la seconde carte flexible (130-2) du second élément détecteur (10-2) sont logées à l'intérieur de la structure concave cible.

13. Module détecteur selon la revendication 10, dans lequel chaque élément détecteur (10) du module détecteur (100) est agencé à l'opposé d'un second élément détecteur (10-2) du second module détecteur (100-2) le long de la seconde direction,
pour chaque élément détecteur (10),
le long de la première direction, la largeur de la structure concave (141) de l'élément détecteur (10) est supérieure à une somme de la largeur de sa carte flexible (130) et de la largeur de la seconde carte flexible (130-2) du second élément détecteur (10-2) opposé à l'élément détecteur (10), de telle sorte que sa carte flexible (130) et la seconde carte flexible (130-2) soient toutes deux logées dans la structure concave (141).

14. Module détecteur (100) selon la revendication 10 ou la revendication 12, dans lequel chaque élément détecteur (10) du module détecteur (100) est agencé à l'opposé d'un second élément détecteur (10-2) du second module détecteur (100-2) le long de la seconde direction,
pour chaque élément détecteur (10),
la structure concave (141) de l'élément détecteur (10) est en outre configurée pour loger une partie de sa carte flexible (130) et une partie de la seconde carte flexible (130-2) du second élément détecteur (10-2) opposé à l'élément détecteur (10), et
une autre partie de la carte flexible (130) de l'élément détecteur (10) est logée dans la seconde structure concave (141-2) du second élément détecteur (10-2) opposée à l'élément détecteur (10).

15. Procédé d'assemblage d'un module détecteur (100), comprenant
l'assemblage d'un ou plusieurs éléments détecteurs (10), dans lequel chacun des un ou plusieurs éléments détecteurs (10) inclut un cristal détecteur (110), une carte de base (120), un composant de support (140) et une carte flexible (130), le composant de support (140) inclut une structure concave (141), une première surface orientée vers la carte de base (120) et une seconde surface adjacente à la première surface, la structure concave (141) inclut une première concavité (1411) et une seconde concavité (1412), la première concavité (1411) est formée par rapport à la première surface du composant de support (140) et configurée pour loger une première partie de la carte flexible (130), et la seconde concavité (1412) est formée par rapport à la seconde surface du composant de support (140) et configurée pour loger une seconde partie de la carte flexible (130), et l'assemblage des un ou plusieurs éléments détecteurs (10) inclut :
le montage du cristal détecteur (110) sur un côté de la carte de base (120) ;
l'installation de la carte de base (120) sur le composant de support (140) ; et
la disposition d'au moins une partie de la carte flexible (130) dans la structure concave (141) du composant de support (140) ; et
l'installation des un ou plusieurs éléments détecteurs (10) sur un second composant de support (20).
